Europäisches Patentamt

European Patent Office

Office européen des brevets

(11) Publication number: **0 105 140 B1**

(12) **EUROPEAN PATENT SPECIFICATION**

(45) Date of publication of patent specification: **28.02.90**

(21) Application number: **83107890.2**

(22) Date of filing: **10.08.83**

⑩ Divisional applications **85113119, 85113120** filed on **16.10.85.**

(51) Int. Cl.⁵: **F 16 J 15/18, F 04 D 29/10**

(54) **Shaft seal.**

(30) Priority: **13.08.82 US 408043**

(43) Date of publication of application:
**11.04.84 Bulletin 84/15**

(45) Publication of the grant of the patent:
**28.02.90 Bulletin 90/09**

(84) Designated Contracting States:
**AT BE CH DE FR GB IT LI LU NL SE**

(56) References cited:
BE-A- 501 574     FR-A-2 134 064
DE-A-2 021 775    FR-A-2 244 943
DE-B-1 034 430    FR-A-2 313 652
DE-B-1 154 684    GB-A- 502 213
DE-C- 513 331     US-A-2 834 617
FR-A- 768 059     US-A-2 957 425
FR-A-1 083 199    US-A-3 443 813
FR-A-2 110 605    US-A-4 082 297

POWER, vol.121, no.2, February 1977, McGraw Hill, US, "Protection systems for mechanical seals", p. 72-73

(73) Proprietor: **A.W. CHESTERTON COMPANY**
**Middlesex Industrial Park Route 93**
**Stoneham Massachusetts 02180 (US)**

(72) Inventor: **Rockwood, Robert E.**
**2 Wildwood Road**
**Windham New Hampshire 03087 (US)**
Inventor: **Antkowiak, Richard P.**
**Washpond Road**
**Hampstead New Hampshire 03841 (US)**

(74) Representative: **Heidrich, Udo, Dr. jur., Dipl.-Phys.**
**Rechtsanwalt & Patentanwalt Dipl.-Phys. Dr. jur.**
**U. HEIDRICH Franziskanerstrasse 30**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a packing seal means according to the first part of claim 1.

Specifically, centrifugal pumps comprise an impeller which is axially adjustable. Typically, a completely closed, one piece, packing housing is integrally connected to the pump housing for sealing the drive shaft to which the impeller is connected; this frequently requires draining the system and removing the impeller for access to the interior of the packing housing and limits the configuration of the packing housing to that originally supplied.

The packing is usually wrapped on the shaft and a seal gland applies axial pressure to create radial force against the shaft and an opposed sealing surface.

Thus, a packing seal means according to the first part of claim 1 has been known from FR—A—2 313 652.

The technical problem of the invention with reference to this prior art is to insure an efficient adjustability of the packing seal.

The solution to this problem is accomplished by the characterizing portion of claim 1.

The packing seal according to the invention
—provides an efficient, adjustment by comprising one sealing wall against the other;
—uses conventional packing material (which is easily changed); and
—eliminates shaft wear caused by the packing.

Regarding claim 1, the combination of rope packing secured between the opposed facing radially extending sealing walls of a seal gland and a rotary member mounted on the shaft where the pressure is directly adjusted by adjusting the seal gland, is neither shown nor suggested by FR—A—2 313 652 which does not even hint at the adjustability of the seal gland in order to adjust the pressure on the rope packing, a highly desirable feature of the invention.

Incidentally, from DE—A—2 021 775 it has been known since 12 years to adjust the pressure on a conventional rope packing, however being abandoned in favor of in shaft direction incompressible sealing elements, without any suggestion that the packing be held between the radial walls of a seal gland and a rotary member attached to the shaft, as in claim 1.

The subclaims go further in specifying the invention.

A plurality of ways of carrying out the invention is described in detail below with reference to drawings which illustrate only specific embodiments, in which:

Fig. 1 is a side elevation view of a centrifugal pump assembly;

Fig. 2 is a sectional view showing a seal housing containing a packing seal;

Fig. 3 is a view, partially broken away, taken along sectional line of Fig. 2.

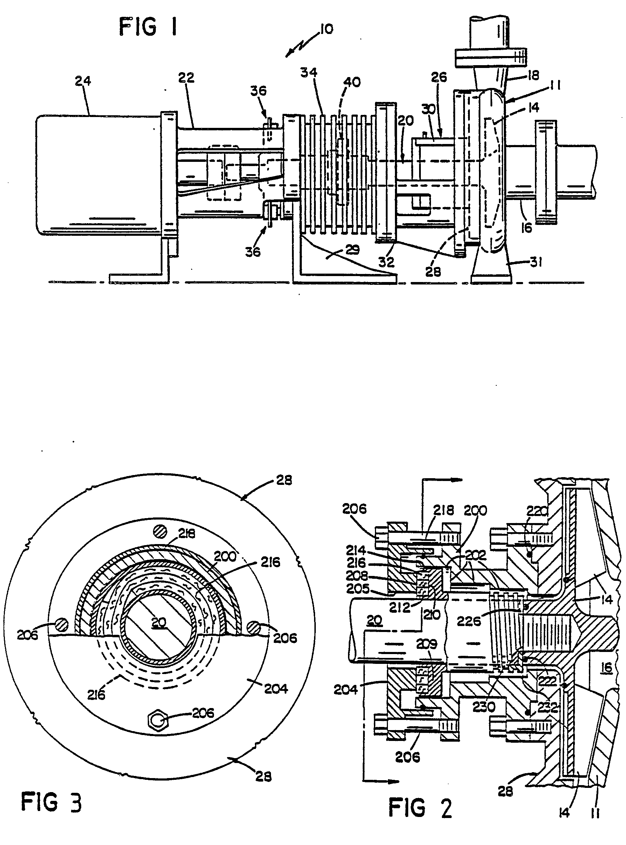

Referring to Fig. 1, in pump assembly 10, pump housing 11 defines an impeller chamber in which impeller 14 rotates to pump fluid from pump inlet 16 to pump outlet 18. Impeller 14 is mounted on one end of shaft 20, the other end of which is (by means of direct mount motor adaptor (22) coupled to and aligned with the shaft of motor 24. Behind pump housing 11, shaft 20 is enclosed by a removable seal housing 26 which is bolted to the backplate 28 of pump housing 11. Also bolted to pump housing 11 is one end of a bearing frame adaptor 32, the other end of which is bolted to bearing housing 34 (which serves as a shaft support for the end of the shaft opposite the impeller) to assure the axial alignment of shaft 20, pump housing 11 and bearing housing 34. Adjustable fastening means 36 are positioned behind bearing housing 34 for adjusting the axial position of impeller 14. Rear foot 29 and casing foot 31 support the pump assembly, foot 29 extending on each side of the center of gravity of the assembly when disconnected from the impeller.

Because of its demountable connection, seal housing 26 can be easily replaced with housings of any desired configuration.

Referring to Figs. 2, 3, seal housing 26 may be replaced by demountable packing seal housing 200 (bolted onto backplate 28) which has a stepped interior surface 202 and is closed at its back end by a seal gland 204 which is adjustable bolted on by bolts 206. Gland 204 has a central clearance hole 205 (through which shaft 20 passes) and a radially extending sealing wall 208 facing towards the impeller.

A cylindrical rotary member 209 (fixed on shaft 20) has a corresponding radially extending sealing wall 210 which has an inner flange 212 close to the shaft and an outer flange 214 spaced apart from the shaft so that sealing wall 210 and flanges 212, 214 form a recess in which rope packing 216 (e.g., 0,95 cm (3/8") or 0,79 cm (5/16") by 55 cm (22") long) can be spirally wrapped.

The radial spacing of the two flanges is at least twice the packing thickness. The axial extent of the flanges is less than the packing thickness so that as gland 204 is tightened down using bolts 206, the packing is compressed axially between the sealing walls 208, 210. Packing 216 nowhere touches shaft 20 and so causes no wear of the shaft.

Packing 216 is held fixed on rotary member 209 so the sealing surface is between wall 208 and packing 216.

Alternatively, the flanges can be part of the seal gland, the packing can be held fixed in the sealing gland and the sealing surface can be defined between sealing wall 210 and the packing.

The space within the seal housing 26 is sealed against leakage by static O-ring seals
—218 (between seal gland 204 and seal housing 200),
—220 (between the front outer wall of seal housing 200 and backplate 28), and
—222 (between the rear end surface of the impeller and the rear radially inwardly extending surface 226 of rotary member 209).

Rotary member 209 extends along shaft 20 from seal gland 204 toward impeller 14 and is provided at its end adjacent backplate 28 with a helically threaded outwardly facing labyrinth seal 230 closely spaced to, e.g., 0,013 cm (0.005'') away from, facing inner surface 232 of the seal housing.

The helical labyrinth seal 230 hydrodynamically pumps fluid outwardly from the seal housing upon rotation of the shaft, reducing fluid pressure within the seal housing.

## Claims

1. Packing seal means for sealing about a rotating shaft (20) comprising
—a seal gland (204)
—having a central opening (205) for mounting about said shaft (20),
—adapted for connection to a stationary member (200)
—through which said shaft (20) extends, and
—a rotary member (209)
—adapted for mounting on and rotation with said shaft (20),
—said seal gland (204) and said rotary member (209) having
—oppposed, facing, radially extending sealing walls (208, 210)
—adapted for relative rotation
—one (210) of the sealing walls has a flange (214)
extending axially toward the other sealing wall (208) and
—spaced from said shaft (20) extending through said sealing walls (208, 210), whereby
—a rope packing (216)
—may be secured
—between said sealing walls (208, 210) and
—extending from said flange (214) radially inwardly toward said shaft (20)
—for sealing said relative rotatable sealing walls (208, 210),
characterized in that
—said seal gland (204) is
—axially adjustable (206), and
—pressure between said packing (216) and said sealing walls (208, 210) being sealed
—may be directly adjusted by adjustment (206) of said seal gland (204).

2. Packing seal means of claim 1, characterized in that
—said flange is
—an outer flange (214) and
—said one sealing wall (210) comprises
—an inner flange (212)
—spaced radially inwardly from said outer flange (214) adjacent said shaft (20) and
—defining with said outer flange (214) a recess in said one wall (210)
—for receiving said rope packing (216).

3. Packing seal means of claim 2, characterized in that
—said sealing walls (208, 210) of said seal gland (204) and said rotary member (209)
—are enclosed in a seal housing (200),
—said seal gland (204)

—being connected to and closing one end of said seal housing (200), and
—at said other end of said seal housing (200)
—said rotary member (209)
—comprises an outwardly facing labyrinth seal (230) and
—said seal housing (200)
—comprises a cylindrical inner surface (232)
—closely spaced to and facing said labyrinth seal (230).

4. Packing seal means of claim 3, characterized in that
—said labyrinth seal (230) comprises
—a helical thread
—oriented to hydrodynamically pump fluid outwardly from said seal housing (200) upon rotation of said shaft (20).

5. Packing seal means of claim 3, characterized by
—an annular static seal (218)
—positioned between said seal gland (204) and said seal housing (200) at the connection therebetween.

6. Packing seal means of claim 5, characterized in that
—said rotary member (209) in said seal housing (200),
—at a position spaced away from said one end thereof,
—has an inwardly radially extending annular sealing wall (226)
—adapted to engage an annular static seal (222).

7. Packing seal means of any preceding claim, characterized in that
—said wall of said rotary member (209)
—is said one sealing wall (210) having said flange (212, 214).

8. Packing seal means of claim 7, characterized in that
—the axial extent of said flanges (212, 214)
—is less than the thickness of a predetermined said rope packing (216) and
—the radial spacing of said flanges (212, 214)
—is at least twice said rope packing (216) thickness.

## Patentansprüche

1. Packung als Wellen (20) -Dichtung mit
—einer Dicht-Brille (204)
—mit mittiger Öffnung (205) zum Haltern um die Welle (20) und
—verbindbar mit einem ortsfesten Glied (200),
—durchsetzt von der Welle (20), und
—einem Dreh-Glied (209)
—drehfest halterbar auf der Welle (20),
—wobei die Dicht-Brille (204) und das Dreh-Glied (209)
—gengenüberliegende radiale Dicht-Wände (208, 210) besitzen
—für Drehung gegeneinander und
—eine (210) der Dicht-Wände einen Flansch (214) besitzt, der
—axial zur anderen Dicht-Wand (208)

—beabstandet von der Dicht-Wände (208, 210) durchsetzenden Welle (20) verläuft, so daß
—eine Dicht-Schnur (216)
—sicherbar ist
—zwischen den Dicht-Wänden (208, 210) und
—vom Flansch (214) radial nach innen zur Welle (20) verlaufend
—zum Abdichten der gegeneinander drehbaren Dicht-Wände (208, 210), gekennzeichnet dadurch, daß
—die Dicht-Brille (204)
—axial verstellbar (206) ist und
—Druck zwischen der Dicht-Schnur (216) un den Dicht-Wänden (208, 210) bei Abdichtung
—unmittelbar einstellbar ist durch Verstellen (206) der Dicht-Brille (204).

2. Packung nach Anspruch 1, gekennzeichnet dadurch, daß
—der Flansch
—ein Außen-Flansch (214) ist und
—die eine Dicht-Wand (210)
—einen Innen-Flansch (212) besitzt,
—beabstandet radial nach innen vom Außen-Flansch (214) nahe der Welle (20) und
—mit dem Außen-Flansch (214) eine Aussparung in der einen Wand (210) bildend
—zur Aufnahme der Dicht-Schnur (216).

3. Packung nach Anspruch 2, gekennzeichnt dadurch, daß
—die Dicht-Wände (208, 210) der Dicht-Brille (204) und des Dreh-Gleids (209)
—in einem Dicht-Gehäuse (200) aufgenommen sind,
—die Dicht-Brille (204)
—mit einem Ende des Dicht-Gehäuses (200) verbunden ist und dieses abschließt, und
—am anderen Ende des Dicht-Gehäuses (200)
—das Dreh-Glied (209)
—eine nach außen zeigende Labyrinth-Dichtung (230) besitzt und
—das Dicht-Gehäuse (200)
—eine zylindrische Innen-Fläche (232) besitzt,
—kurz beabstandet von und gegenüber der Labyrinth-Dichtung (230).

4. Packung nach Anspruch 3, gekennzeichnet dadurch, daß
—die Labyrinth-Dichtung (230)
—ein Schraubenlinien-Gewinde besitzt,
—ausgerichtet zum hydrodynamischen Abpumpen von Fluid aus dem Dicht-Gehäuse (200) bei Wellen (20)-Drehung.

5. Packung nach Anspruch 3, gekennzeichnet durch
—eine ruhende Ring-Dichtung (218)
—zwischen der Dicht-Brille (204) und dem Dicht-Gehäuse (200) an deren Übergang.

6. Packung nach Anspruch 5, gekennzeichnet dadurch, daß
—das Dreh-Glied (209) im Dicht-Gehäuse (200)
—an einer Stelle im Abstand von dem einen Ende
—eine radial nach innen verlaufende ringförmige Dicht-Wand (226) besitzt
—zum Anlegen an einer ruhenden Ring-Dichtung (222).

7. Packung nach einem der vorhergehenden Ansprüche, gekennzeichnet dadurch, daß
—die Wand des Dreh-Glieds (209)
—die eine Dicht-Wand (210) mit dem Flansch (212, 214) ist.

8. Packung nach Anspruch 7, gekennzeichnet dadurch, daß
—das Axial-Maß der Flansche (212, 214)
—kleiner als die Dicke einer vorgegebenen Dicht-Schnur (216) ist und
—der Radial-Abstand der Flansche (212, 214)
—mindestens die doppelte Dicke der Dicht-Schnur (216) beträgt.

**Revendications**

1. Garniture d'étanchéité destinée à assurer l'étanchéité autour d'un arbre rotatif (20) comprenant
—un presse-étoupe (204)
—possédant une ouverture centrale (205) pour le montage autour de l'arbre (20),
—pouvant être raccordé à un élément fixe (200)
—à travers lequel s'étend l'arbre (20), et
—un élément rotatif (209)
—apte à être monté sur et entrer en rotation avec l'arbre (20)
—le presse-étoupe (204) et l'élément rotatif (209) comportant
—des parois d'étanchéité opposées, en regard, s'étendant radialement (208, 210)
—aptes à la rotation relative
—l'une (210) des parois d'étanchéité comportant une collerette (214)
—s'étendant axialement vers l'autre paroi d'étanchéité (208) et
—espacée par rapport à l'arbre (20) s'étendant à travers les parois d'étanchéité (208, 210), moyennant quoi
—une garniture en cordage (216)
—peut être fixée
—entre les parois d'étanchéité (208, 210) et
—s'étendant à partir de la collerette (214) radialement vers l'intérieur en direction de l'arbre (20)
—pour rendre étanche les parois d'étanchéité pouvant entrer en rotation relative (208, 210), caractérisée en ce que
—le presse-étoupe (204) est
—réglable axialement (206), et
—la pression entre la garniture (216) et les parois d'étanchéité (208, 210) étant hermétiques
—peut être ajustée directement par réglage (206) du presse-étoupe (204).

2. Garniture d'étanchéité selon la revendication 1, caractérisé en ce que
—la collerette est
—une collerette extérieure (214) et
—une des parois d'étanchéité (210) comprend
—une collerette intérieure (212)
—espacée radialement vers l'intérieur à partir de la collerette extérieure (214) contiguë à l'arbre (20) et
—définissant avec la collerette extérieure (214) un évidement dans une des parois (210)

—pour recevoir ladite garniture en cordage (216).

3. Garniture d'étanchéité selon la revendication 2, caractérisée en ce que

—les parois d'étanchéité (208, 210) du presse-étoupe (204) et de l'élément rotatif (209)

—sont enfermées dans un logement hermétique (200),

—le presse-étoupe (204)

—étant relié à et obturant une extrémité du logement hermétique (200), et

—sur l'autre extrémité du logement hermétique (200)

—l'élément rotatif (209)

—comprend un joint à labyrinthe faisant face vers l'extérieur (230) et

—le logement d'étanchéité (200)

—comprend une surface intérieure cylindrique (232)

—étroitement espacée par rapport à et faisant face au joint à labyrinthe (230).

4. Garniture d'étanchéité selon la revendication 3, caractérisée en ce que

—le joint en labyrinthe (230) comprend

—un filetage hélicoïdal

—orienté pour pomper hydrodynamiquement le fluide vers l'extérieur à partir dudit logement hermétique (200) lors de la rotation de l'arbre (20).

5. Garniture d'étanchéité selon la revendication 3, caractérisée par

—un joint d'étanchéité statique annulaire (218)

—positionné entre le presse-étoupe (204) et le logement hermétique (200) au raccordement entre ceux-ci.

6. Garniture d'étanchéité selon la revendication 5, caractérisée en ce que

—l'élément rotatif (209) dans le logement d'étanchéité (200)

—en une position espacée par rapport à l'une de ses extrémités,

—comporte une paroi d'étanchéité annulaire s'étendant vers l'intérieur radialement (226)

—apte à venir en contact avec un joint d'étanchéité statique annulaire (222).

7. Garniture d'étanchéité selon l'une quelconque des revendications précédentes, caractérisée en ce que

—la paroi de l'élément rotatif (209)

—est l'une des parois d'étanchéité (210) comportant la collerette (212, 214).

8. Garniture d'étanchéité selon la revendication 7, caractérisée en ce que

—l'étendue axial des collerettes (212, 214)

—est inférieure à l'épaisseur d'une garniture en cordage prédéterminée (216) et

—l'espacement radial desdites collerettes (212, 214)

—est au moins deux fois égal à l'épaisseur de ladite garniture en cordage (216).

EP 0 105 140 B1

FIG 1

FIG 3

FIG 2

1